(19) Europäisches Patentamt
European Patent Office
Office européen des brevets

(11) **EP 1 892 874 B1**

(12) **EUROPEAN PATENT SPECIFICATION**

(45) Date of publication and mention
of the grant of the patent:
**30.07.2014 Bulletin 2014/31**

(51) Int Cl.:
***H04L 1/00*** *(2006.01)*     ***H04L 1/18*** *(2006.01)*

(21) Application number: **07114420.8**

(22) Date of filing: **16.08.2007**

(54) **Data retransmission method, communications device, and computer program**

Datenrückübertragungsverfahren, Kommunikationsgerät und Computerprogramm

Procédé de retransmission de données, dispositif de communications, et programme informatique

(84) Designated Contracting States:
**DE FR GB IT**

(30) Priority: **22.08.2006 JP 2006225839**

(43) Date of publication of application:
**27.02.2008 Bulletin 2008/09**

(73) Proprietor: **Fujitsu Ltd.**
**Kawasaki-shi, Kanagawa 211-8588 (JP)**

(72) Inventors:
- **Shinohara, Chiaki**
  **c/o Fujitsu Kyushu Network Technologies Limited**
  **Fukuoka-shi, Fukuoka 814-8588 (JP)**
- **Soejima, Yoshinori**
  **c/o Fujitsu Kyushu Network Technologies Limited**
  **Fukuoka-shi, Fukuoka 814-8588 (JP)**
- **Otonari, Akihide**
  **c/o Fujitsu Kyushu Network Technologies Limited**
  **Fukuoka-shi, Fukuoka 814-8588 (JP)**
- **Obuchi, Kazuhisa**
  **c/o Fujitsu Limited**
  **Kawasaki-shi, Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
**EP-A- 1 615 365**     **US-A1- 2002 150 040**
**US-A1- 2003 110 435**

- SHU LIN ET AL: "AUTOMATIC-REPEAT-REQUEST ERROR-CONTROL SCHEMES" IEEE COMMUNICATIONS MAGAZINE, IEEE SERVICE CENTER,NEW YORK, NY, US, vol. 22, no. 12, 1 December 1984 (1984-12-01), pages 5-17, XP000674086 ISSN: 0163-6804

## Description

The present invention relates to a method and the like for retransmitting data.

Presently, in mobile communications technology, third-generation mobile communications systems such as "IMT-2000", "3G", and so on are becoming widespread. Furthermore, development of fourth-generation mobile communications systems, which are ultra-high-speed mobile communications systems and the successors to the third-generation mobile communications systems, is continuing.

A standard called "High Speed Downlink Packet Access" (HSDPA) has been proposed as a technology that realizes enhanced speed and efficiency without significantly altering the third-generation mobile communications system. In the HSDPA standard, the modulation type and error correction coding rate are adjusted in accordance with the quality of the signal received by the mobile telephone terminal (MS) from the base station (BTS) while utilizing the same 5 MHz frequency as is used in Wideband Code Division Multiple Access (W-CDMA), which is a conventional third-generation mobile communications system standard; it is thus possible to perform communications more efficiently and at a higher speed than with W-CDMA. There are instances where mobile communications systems that employ the HSDPA standard are referred to as "3.5-generation mobile communications systems" or "3.5G".

HSDPA employs a standard called "Hybrid-Automatic Repeat reQuest" (H-ARQ) as a scheme for retransmission control. According to H-ARQ, when an error is detected, the number of retransmissions to be executed in order to perform error recovery is limited.

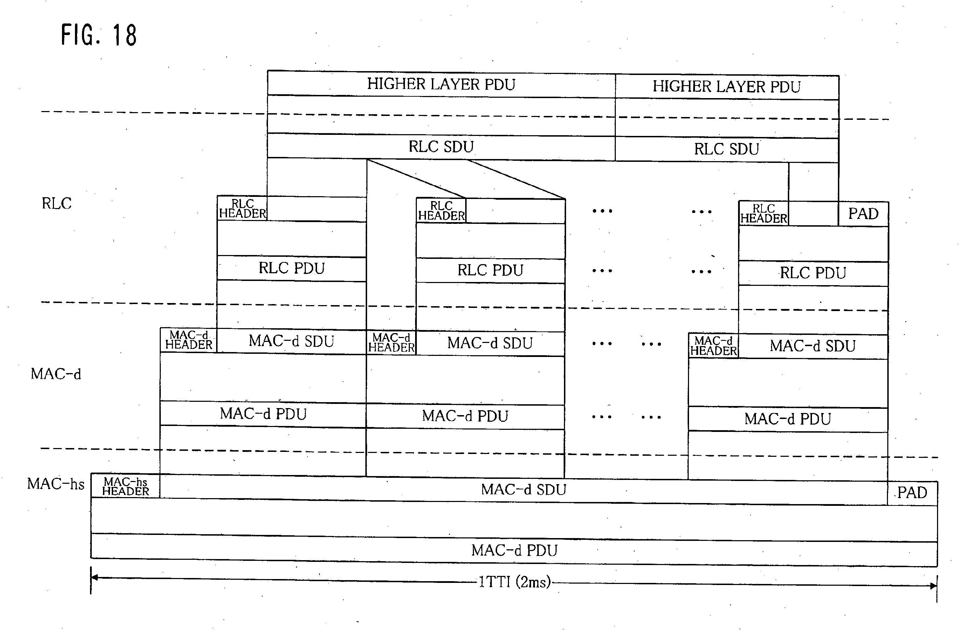

"Stop and Wait" has been proposed as one communications scheme utilizing H-ARQ. This communications scheme shall be briefly explained here based on FIGS. 18 to 20, with the case of a 6-multiplex channel communications system being used as an example.

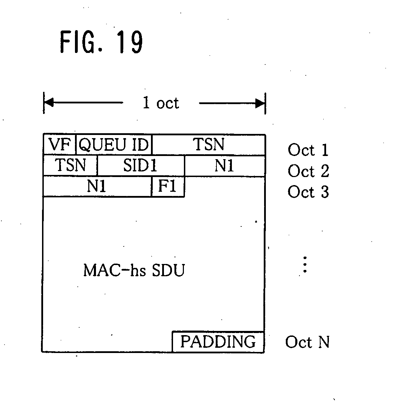

The transmitting side, or in other words, the base station, generates Mac-dPDU data in the Mac-hs in the format shown in FIG. 19, based on a data flow such as that shown in FIG. 18. Then, the transmitting side sends this data to the receiving side, or in other words, the mobile telephone terminal, after attaching a CRC code or a Turbo code, or after performing rate matching.

The receiving side checks the received data and returns "ACK" to the transmitting side if reception has been successfully completed. If reception has not been successfully completed, the receiving side returns "NACK" to the transmitting side. The transmitting side can determine which process the "ACK" or "NACK" information belongs to based on the timing at which the "ACK" or "NACK" is received.

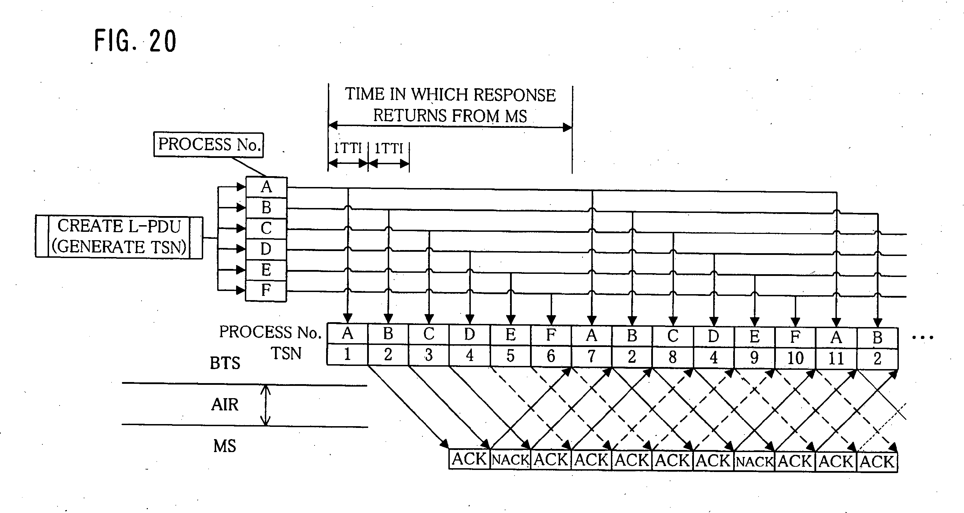

As shown in FIG. 20, the transmitting side has the same number of processes as multiplexed signals (in the present example, 6 processes). The transmitting side divides the data to be sent to the receiving side into the six processes and sequentially sends this data by executing each process in parallel.

However, in a certain single process, if "ACK" does not return from the receiving side for the data sent immediately prior, the next data in that process is not transmitted. In other words, the process is stopped (stop) and a reply is waited for (wait). Furthermore, in the case where "NACK" returns instead of "ACK", the data transmitted immediately prior is retransmitted. FIG. 20 shows an example in which data with a TSN of "2" is transmitted and retransmitted. It should be noted that there are cases in which each process has a single channel as well as cases in which a single channel is shared among a plurality of processes.

In addition, a method such as that described in Japanese unexamined patent publication No. 2004-349742 has been proposed as a method for improving the third-generation mobile communications system. According to this method, a data divider divides the data to be transmitted into a plurality of blocks, thereby generating n number of divided blocks. n number of N error correction coders perform error correction coding on n number of divided blocks respectively on a block-by-block basis, and output coded blocks. A data concatenating portion concatenates the n number of coded blocks that have been error correction coded on a block-by-block basis. A division/concatenation controller controls at least one of the data divider and the data concatenating portion so that the division of the transmitted data or the concatenation of the coded blocks is performed on a bit-by-bit basis.

However, there is the possibility that even when the transmitting side retransmits the data to the receiving side, the data is not successfully received by the receiving side, and a request for retransmission is provided once again. It is inefficient for a retransmission request for the same data to be provided over and over, and for retransmission to be performed over and over in accordance therewith. As mentioned above, the third-generation mobile communications system limits the number of retransmissions; however, in order to increase the quality of communications, it is necessary to improve the reliability of data retransmission.

It is therefore desirable to improve the reliability of data retransmission beyond that provided by the conventional art.

US-A1-2003/110435 discloses a method and device according to the preamble of independent claims 1 and 9, and in which, upon receipt of a negative acknowledgment in respect of a given packet, a retransmit packet is sent. The retransmit packet can be divided into a predetermined number of sub-packets, and the number of sub-packets can be set as a function of any suitable parameters.

EP-A-1 615 365 discloses a method of retransmitting data via multiple antennas, wherein the modulation scheme and encoding rate of retransmit data can be changed, and the resulting data stream is allocated to the plurality of antennas for retransmission as a plurality of sub-streams.

US-A1-2002/150040 discloses a communication system for retransmitting data packets by dividing the retransmission into a plurality of sub-packets, and puncturing each sub-packet into one or more packets within the sequence of packets being transmitted to a receiver.

A data retransmission method according to one aspect of the present invention is a data retransmission method for retransmitting data of a frame format in accordance with a protocol from a transmitting side to a receiving side wherein the receiving side has requested the transmitting side to retransmit data, and the transmitting side divides data to be retransmitted, based on a request for retransmission, into a plurality of pieces of divided data upon receipt of a request for the retransmission of the data from the receiving side, and sends each piece of divided data to the receiving side, characterised in that each piece of divided data is set to a size based on the quality of communication with the receiving side.

Preferably, the transmitting side may divide the data to be retransmitted into larger-sized pieces of divided data the higher a quality of communication with the receiving side, and divide the data to be retransmitted into smaller-sized pieces of divided data the lower the quality of communication with the receiving side.

Further, the transmitting side may divide the data to be retransmitted into fewer pieces of divided data the higher a quality of communication with the receiving side, and divide the data to be retransmitted into more pieces of divided data the lower the quality of communication with the receiving side.

Further, the data to be retransmitted may include a plurality of frames generated based on a protocol of a higher layer than a protocol to which the data to be retransmitted belongs, and the transmitting side may divide the data to be retransmitted into the divided data so that data that belongs to a single frame is not divided.

Moreover, information regarding the data to be retransmitted may be added to the divided data. The data to be retransmitted is the basis of the divided data.

Moreover, the transmitting side may limit the number of times a piece of divided data is retransmitted may be limited to a predetermined number of times. In the case where a piece of divided data belonging to the data to be retransmitted is not successfully received by the receiving side within the predetermined number of times, the transmitting side stops transmitting the remaining pieces of divided data belonging to the data to be retransmitted.

In addition, the data to be retransmitted may include a plurality of frames generated based on a protocol of a higher layer than a layer of a protocol to which the data to be retransmitted belongs. The transmitting side may limit the number of times a piece of divided data is retransmitted to a predetermined number of times, and in the case where a piece of the divided data belonging to the data to be retransmitted is not successfully received by the receiving side within the predetermined number of times, may transmit to the receiving side the divided data that includes a part of a frame different from all the frames whose part is included in the divided data that is not successfully received, but stops transmitting the other divided data to the receiving side.

Moreover, the transmitting side may limit the number of times the divided data is retransmitted in accordance with the number of pieces of divided data into which the data to be retransmitted has been divided.

According to another aspect of the present invention, there is provided a communications device comprising a retransmission request acceptor for accepting a request to retransmit data from a requester, a data divider for dividing data to be retransmitted into a plurality of pieces of divided data upon receipt of a request for the retransmission of the data from the retransmission request acceptor, and a divided data transmitter for transmitting each piece of the divided data to the requester, characterised in that the data divider is arranged to set each piece of divided data to a size based on the quality of communication with the requester.

According to another aspect of the present invention, there is provided a computer readable medium storing a program used in a computer for transmitting and receiving data via a communication line, the program causing a computer to perform the steps of accepting from a requester a request to retransmit data, dividing the data to be retransmitted into a plurality of pieces of divided data upon receipt of a request for the retransmission of the data, and transmitting each piece of the divided data to the requester, wherein each piece of divided data is set to a size based on the quality of communication with the requester.

According to the present invention, by dividing the data to be retransmitted, retransmission is performed with the amount of data per single frame having been reduced. Accordingly, it is possible to reduce the rate of error occurrence, and to improve the reliability of retransmission.

Reference will now be made, by way of example, to the accompanying drawings, in which:

FIG. 1 is a diagram showing an example of the overall configuration of a communications system.
FIG. 2 is a diagram showing an example of the functional configuration of a base station.
FIG. 3 is a diagram showing an example of the functional configuration of a mobile telephone terminal.
FIG. 4 is a diagram showing an example of a method for generating an L-PDU frame.
FIG. 5 is a diagram showing an example of a method for generating a retransmission frame.
FIG. 6 is a diagram showing an example of data exchange between a base station and a terminal apparatus.
FIG. 7 is a diagram showing another example of data exchange between a base station and a terminal apparatus.

FIG. 8 is a diagram showing another example of a method for generating a retransmission frame.

FIG. 9 is a diagram showing yet another example of data exchange between a base station and a terminal apparatus.

FIG. 10 is a diagram showing an example of a conventional method for performing a request for retransmission of an L-PDU frame.

FIG. 11 is a diagram showing yet another example of a method for generating a retransmission frame.

FIG. 12 is a diagram showing an example of a method for generating and retransmitting a retransmission frame.

FIG. 13 is a diagram showing yet another example of a method for generating a retransmission frame.

FIG. 14 is a diagram showing yet another example of data exchange between a base station and a terminal apparatus.

FIG. 15 is a diagram showing yet another example of a method for generating a retransmission frame.

FIG. 16 is a diagram showing yet another example of a method for generating a retransmission frame.

FIG. 17 is a flowchart describing the overall flow of processing for retransmission.

FIG. 18 is a diagram showing a conventional data flow example found in a third-generation mobile communications system.

FIG. 19 is a diagram showing an example of the conventional MAC-hs PDU format.

FIG. 20 is a diagram showing an example of a method for transmitting/receiving data through the conventional Stop and Wait scheme.

Hereinafter, the present invention will be explained more in detail with reference to embodiments and drawings.

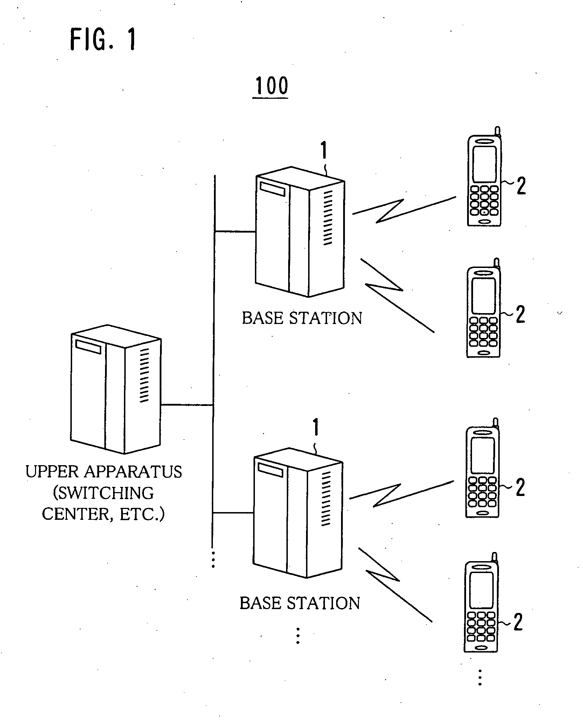

As shown in FIG. 1, a communications system 100 is configured of a base station 1, a mobile telephone terminal 2, an upper apparatus, and the like.

The base station 1 is a wireless base station apparatus operated by a telecommunications business. The base station 1 is a wireless station that performs processing for controlling the connection of a mobile telephone terminal 2 belonging to a user who subscribes to the mobile telephone communications service provided by the telecommunications business, and processing for relaying communications between the mobile telephone terminal and the business's upper apparatus. There are also cases in which the base station 1 is called a "base transceiver station" (BTS).

The mobile telephone terminal 2 is a terminal apparatus used by a user who partakes in the provided mobile telephone communications service. There are also cases in which the mobile telephone terminal is called a "mobile terminal" or a "mobile station" (MS).

The upper apparatus is an already-present transmission apparatus, a wireless base station control apparatus, a mobile switching apparatus (switching center), or the like. The mobile telephone terminal 2 can perform communications with another mobile telephone terminal 2, a PHS terminal, a land-line telephone terminal, or the like via the base station 1 and the upper apparatus. Furthermore, it is also possible for the mobile telephone terminal 2 to perform communications with an Internet web server, an e-mail server, or the like.

The hardware and software configurations of the base station 1 and the mobile telephone terminal 2 are basically the same as in the conventional art. However, the base station 1 and the mobile telephone terminal 2 perform communications that apply the various methods described in order hereafter. Accordingly, software and hardware for applying these various methods, which shall be described below, are added to the base station 1 and the mobile telephone terminal 2.

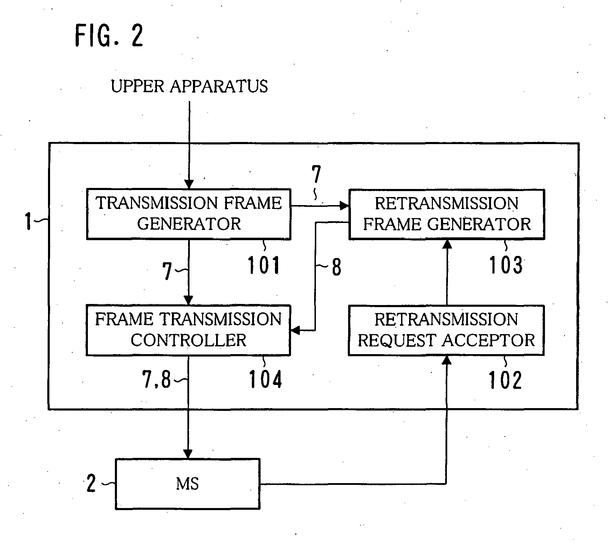

Hardware or software for implementing a transmission frame generator 101, a retransmission request acceptor 102, a retransmission frame generator 103, and a frame transmission controller 104 is added to the base station 1, as shown in FIG. 2.

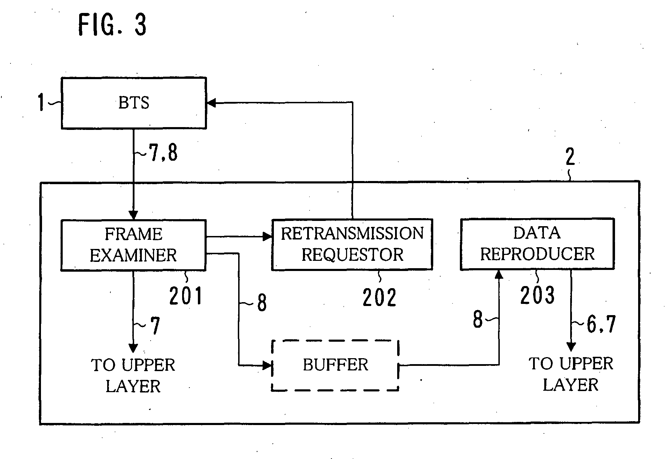

On the other hand, hardware or software for implementing a frame examiner 201, a retransmission requestor 202, and a data reproducer 203 is added to the mobile telephone terminal 2, as shown in FIG. 3.

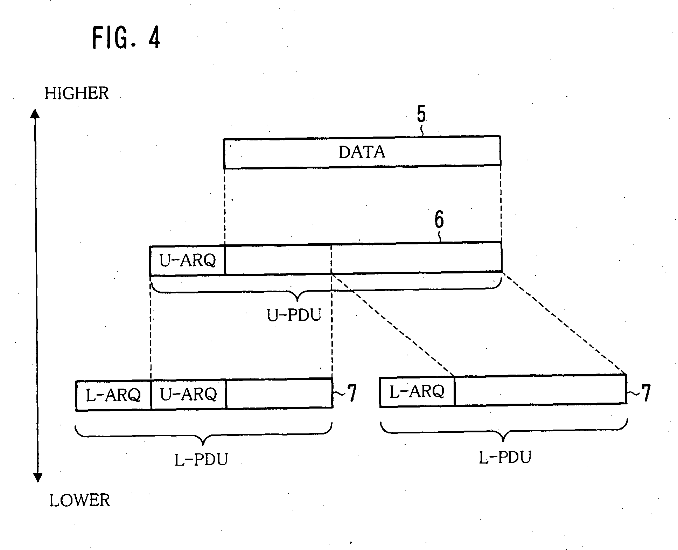

In FIG. 2, the transmission frame generator 101 of the base station 1 performs the processing shown in FIG. 4 in order to convert data 5, which is to be transmitted to the mobile telephone terminal 2, into data (frames) compatible with the protocol shared by the base station 1 and the mobile telephone terminal 2.

In FIG. 4, upon receiving the data 5, which is to be transmitted to the mobile telephone terminal 2, from the upper apparatus, the transmission frame generator 101 converts the data 5 into data in the Protocol Data Unit (PDU) format compliant with the predetermined protocol of the upper layer. Specifically, protocol control information of that layer is attached to the data 5 as a header. Hereafter, data in this format shall be referred to as "Upper-Protocol Data Unit (U-PDU) frame 6". In addition, in the present embodiment, because the base station 1 and mobile telephone terminal 2 perform communications based on the H-ARQ scheme, the U-PDU frame 6 header is referred to as a "U-ARQ header".

The transmission frame generator 101 further converts the U-PDU frame 6 into data (frames) in a format compliant with the predetermined protocol of the lower layer. Specifically, the U-PDU frame 6 is divided into data of a length not greater than a predetermined data length. Then, protocol control information of that layer is attached to each piece of the divided data as a header.

Hereafter, data in this format shall be referred to as "Lower-Protocol Data Unit (L-PDU) frame 7". In addition, an L-PDU frame 7 header shall be referred to as an "L-ARQ header". There are cases where code for error detection and correction, such as, for example, Cyclic Redundancy Check (CRC) code or Turbo code, are included in the L-ARQ header. Furthermore, there are cases where other various information, which shall be described later, is included as well.

The L-PDU frame 7 generated in this manner is data (frames) of a format for transmission to the mobile telephone terminal 2.

The generated L-PDU frame 7 is transmitted to the target mobile telephone terminal 2 by the frame transmission controller 104.

In FIG. 3, the frame examiner 201 of the mobile telephone terminal 2 examines whether or not there is an error in the L-PDU frame 7 received from the base station 1 through a publicly-known method using the error correction code included in the L-ARQ header of that L-PDU frame 7.

In the case where the result of the examination performed by the frame examiner 201 shows that there is an error in the L-PDU frame 7 received from the base station 1 and it has been determined that the error cannot be corrected, or in other words, the case in which reception cannot be successfully completed, the retransmission requestor 202 performs processing requesting the base station 1 to once again transmit, or retransmit, the L-PDU frame 7. Essentially, a "NACK" signal is returned to the base station 1 as per the conventional art.

It should be noted that in the case where the frame examiner 201 has confirmed that there are no errors in the L-PDU frame 7 received from the base station 1, an "ACK" signal is transmitted to the base station 1 as per the conventional art.

In FIG. 2, the retransmission request acceptor 102 of the base station 1 performs processing for accepting, from the mobile telephone terminal 2, a request indicating that the L-PDU frame 7 should be retransmitted. Specifically, a "NACK" signal is received, and the TSN of the L-PDU frame is judged based on the timing of the reception.

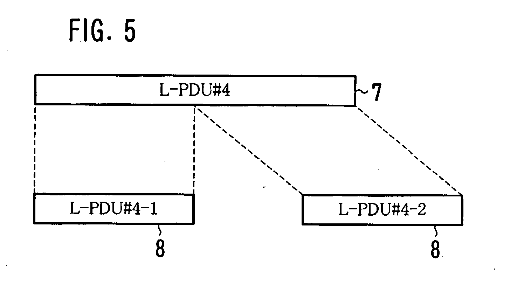

As shown in FIG. 5, the retransmission frame generator 103 generates a retransmission frame 8, which is a frame for retransmission, by dividing the L-PDU frame 7 that is to be retransmitted into predetermined data lengths.

The frame transmission controller 104 performs control for transmitting, to the target mobile telephone terminal 2, the L-PDU frame 7 generated by the transmission frame generator 101 and the retransmission frame 8 generated by the retransmission request acceptor 102. In the present embodiment, control is performed through a multiplex channel Stop and Wait scheme, as described earlier in the "Description of the Related Art" section. However, in the present invention, to simplify explanations, it is assumed that control is performed through a multiplex channel Stop and Wait scheme having three processes.

In FIG. 3, the data reproducer 203 of the mobile telephone terminal 2 reproduces the L-PDU frame 7 based on a plurality of retransmission frames 8 received from the base station 1.

Hereafter, various embodiments of communications performed between the base station 1 and the mobile telephone terminal 2 according to the present invention shall be explained in order.

[First Timing for Transmission of the Retransmission Frames 8]

When the retransmission request acceptor 102 accepts, from the mobile telephone terminal 2, a request indicating that the L-PDU frame 7 should be retransmitted, the retransmission frame generator 103 divides that L-PDU frame 7 into a plurality of retransmission frames 8, as shown in FIG. 5.

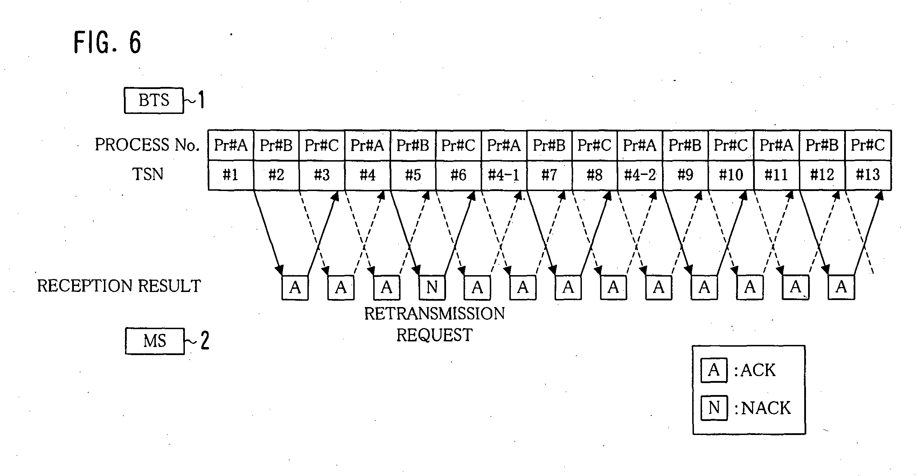

Whereas the L-PDU frame 7 would conventionally be retransmitted, in the present embodiment, the frame transmission controller 104 sequentially transmits the retransmission frames 8. For example, as shown in FIG. 6, an L-PDU frame 7 with a TSN of "#4" is sent in the process "Pr#A", but in the case where there is a request for retransmission of that L-PDU frame 7, retransmission frames 8, which are generated by the retransmission frame generator 103 dividing that L-PDU frame 7 into two parts, are sequentially sent by that process. At this time, TSNs such as "#4-1", "#4-2", and so on may be given to each retransmission frame 8. There are various ways of giving TSNs to the retransmission frames 8, which shall be described later.

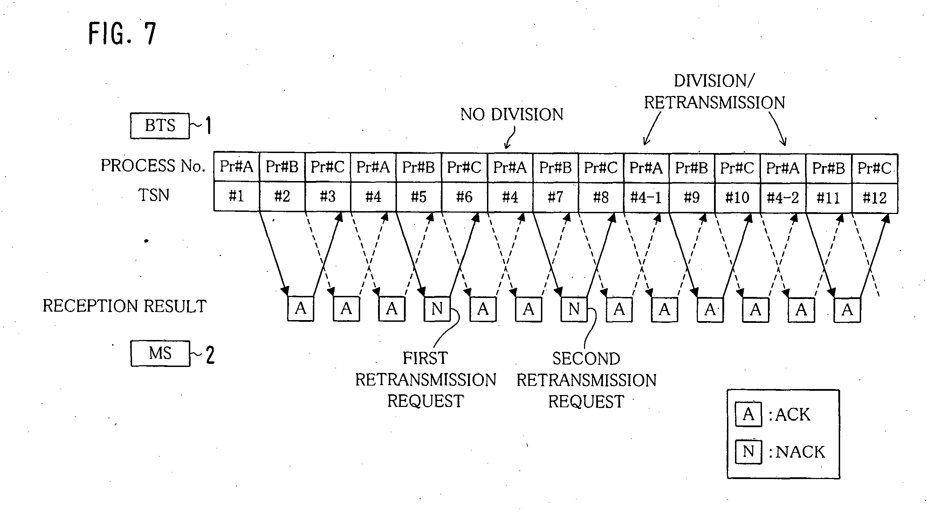

Note that in FIG. 6, the solid or dotted arrows that point from the base station (BTS) 1 to the mobile telephone terminal (MS) 2 indicate the L-PDU frame 7 or retransmission frames 8 transmitted from the base station 1 to the mobile telephone terminal 2. The solid arrows indicate the exchange of data or signals belonging to the "Pr#A" process, while the dotted arrows indicate the exchange of data or signals belonging to other processes. The same applies to FIGs. 7, 9, and 14, which shall be explained later.

[Second Timing for Transmission of the Retransmission Frames 8]

In the example "first timing for transmission of the retransmission frame 8" provided above, the retransmission frame generator 103 divides an L-PDU frame 7 directly upon accepting a request indicating that the L-PDU frame 7 should be retransmitted. However, in the present example, the retransmission frame generator 103 does not perform processing only having accepted the first request. Instead, the frame transmission controller 104 retransmits the L-PDU frame 7 to the mobile telephone terminal 2 as per the conventional art.

Then, when the number of requests indicated by a threshold Pa have been received for the same L-PDU frame 7, the retransmission frame generator 103 performs processing for generating the retransmission frames 8, and the frame transmission controller 104 performs processing for sequentially transmitting these retransmission frames 8. Note that the threshold Pa is set as a natural number of "2" or more.

For example, in the case where the threshold Pa is set at "2", it is assumed that the base station 1 has transmitted the L-PDU frame 7 with a TSN of "#4" through the "Pr#A" process. When the retransmission request acceptor 102 accepts a request for retransmission of that L-PDU frame 7, the retransmission request acceptor 102 checks what number retransmission request for that L-PDU frame 7 the current retransmission request is.

In the case where the request for retransmission is the first request, the frame transmission controller 104 performs processing in which the L-PDU frame 7 is retransmitted as-is via the same process, without being divided into retransmission frames 8.

In the case where the request for retransmission is the second request, or in other words, the same number as the threshold Pa, the retransmission frame generator 103 divides the L-PDU frame 7, thereby generating a plurality of retransmission frames 8. Then, the frame transmission controller 104 performs processing that sequentially sends these retransmission frames 8 through the same process.

[Adjustment of Division Size in Accordance with CQI]

There are instances where the quality state of the transmission channel changes while the base station 1 and the mobile telephone terminal 2 are communicating. The error rate drops when the quality is high; however, the error rate increases when the quality is poor. Therefore, the retransmission frame generator 103 divides the L-PDU frame 7 into retransmission frames 8 according to the following method.

The retransmission frame generator 103 acquires information regarding the quality of the transmission channel, or in other words, Channel Quality Information (CQI). Acquisition of the CQI may be performed periodically, or may be performed when division of the L-PDU frame 7 becomes necessary.

When the L-PDU frame 7 is divided, the retransmission frame generator 103 determines a bit size (data length) for the divisions based on the latest CQI and a rule prepared in advance. It is possible for this rule to be set in the form of a function, a table or the like, and so on; using the value of the quality indicated by the CQI as a parameter, a greater bit size is derived the higher the quality indicated by this value, and a lesser bit size is derived the lower the quality indicated by this value.

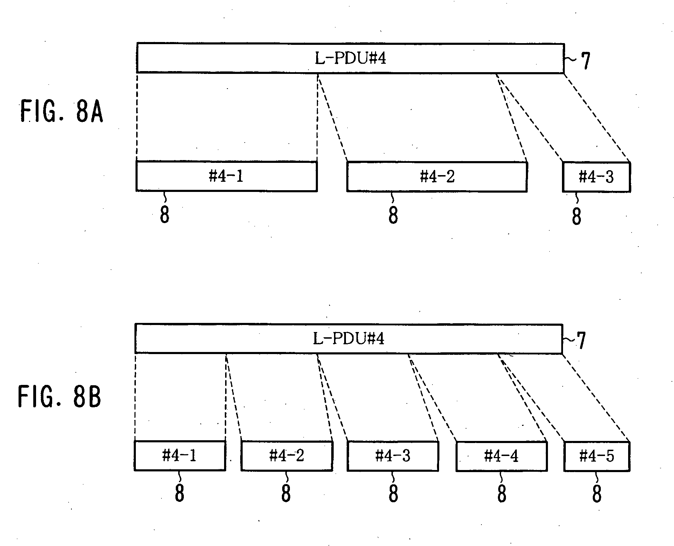

Then, the retransmission frame generator 103 divides the L-PDU frame 7 into parts according to the determined bit size. As a result, retransmission frames 8 of a large bit size (data length), as shown in FIG. 8A, are obtained in the case where the CQI indicates high quality, whereas retransmission frames 8 of a small bit size (data length), as shown in FIG. 8B, are obtained in the case where the CQI indicates low quality.

[Limitation of Number of Retransmissions of Retransmission Frames 8]

As explained earlier in the "Description of the Related Art" section, the number of retransmissions is limited in H-ARQ. In other words, a threshold Cmax is set, and the base station 1 only performs retransmissions up to the number indicated by the threshold Cmax, even if "NACK" is repeatedly returned for the same L-PDU frame 7.

However, in the case where the L-PDU frame 7 is divided into retransmission frames 8 and retransmitted, the overall retransmission process (number of steps) grows as the number of divisions increases (or in other words, the more finely the L-PDU frame 7 is divided). In such a case, there is the danger of an overall drop in performance.

Therefore, the number of divisions may be limited in the following manner. For example, the number of divisions of the L-PDU frame 7 may be limited to the division limit number Dm that fulfills the following formula (1).

$$\alpha \geq Rmax \cdot Dm \quad \dots \ (1)$$

In formula (1), "$\alpha$" is a constant. The threshold Cmax, for example, may be used for the constant $\alpha$. Alternatively, a smaller value than the threshold Cmax may be used, taking into consideration the number of retransmissions prior to division of the L-PDU frame 7 (refer to FIG. 7). "Rmax" is the number of retransmissions to which the retransmission frames 8, into which the L-PDU frame 7 has been divided, are limited.

Alternatively, the number of retransmissions may be limited. It is assumed that, for example, the number of parts the L-PDU frame 7 for which retransmission has been requested is to be divided into has been determined according to the method described earlier under "adjustment of division size in accordance with CQI". Such being the case, the frame transmission controller 104 substitutes the determined number with the division limit number Dm from formula (1) and calculates the retransmission limit number Rmax that fulfills formula (1). Then, the frame transmission controller 104 performs control so that the number of retransmissions of the retransmission frames 8, into which the L-PDU frame 7 has been divided, does not exceed the retransmission limit number Rmax.

In this manner, it is possible to prevent a decrease in overall performance by performing limitation so that the number of retransmissions decreases as the number of divisions increases, or so that the number of divisions decreases as the number of retransmissions increases.

[Stopping Transmission of Retransmission Frames 8]

Even when the base station 1 divides the L-PDU frame 7 into a plurality of retransmission frames 8 and performs retransmission, there are cases where a limit is placed on the number of retransmissions with some of the retransmission frames 8 not yet successfully received by the mobile telephone terminal 2. As a result, there are cases where the data reproducer 203 of the mobile telephone terminal 2 cannot reproduce the original data even if the remaining retransmission frames 8 are acquired.

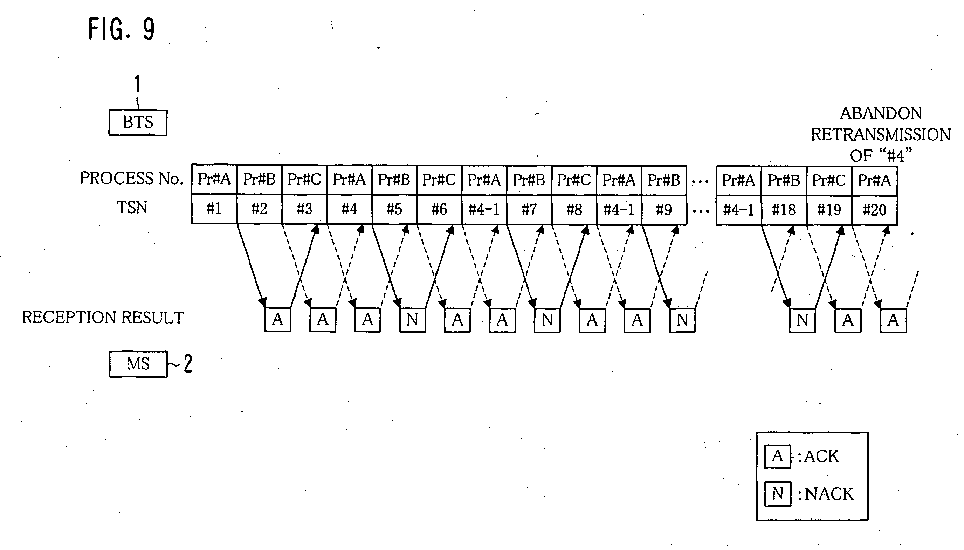

Accordingly, the frame transmission controller 104 of the base station 1 may control transmission of the retransmission frames 8 through the method indicated in FIG. 9.

As shown in FIG. 9, when, for example, the frame transmission controller 104 accepts a request for retransmission of the L-PDU frame 7 with a TSN of "#4", that L-PDU frame 7 is divided into a plurality of retransmission frames 8 by the retransmission frame generator 103, as was explained earlier.

Here, it is assumed that the transmission frame generator 101 has attempted retransmission of the L-PDU frame 7 by transmitting the retransmission frame 8 indicated by "#4-1", and a "NACK" signal has been returned even after a predetermined number of attempts.

Such being the case, the transmission frame generator 101 abandons transmission of that retransmission frame 8 as well as the remaining retransmission frames 8. In other words, retransmission of the L-PDU frame 7 indicated by "#4" is abandoned.

[Changing Division Position of Retransmission Frame 8]

Incidentally, in the case where the prescribed maximum bit size (bit length) of the L-PDU frame 7 is greater than the size of the U-PDU frame 6, there are instances where the transmission frame generator 101 of the base station 1 generates the L-PDU frame 7 through a method different from the method indicated in FIG. 4.

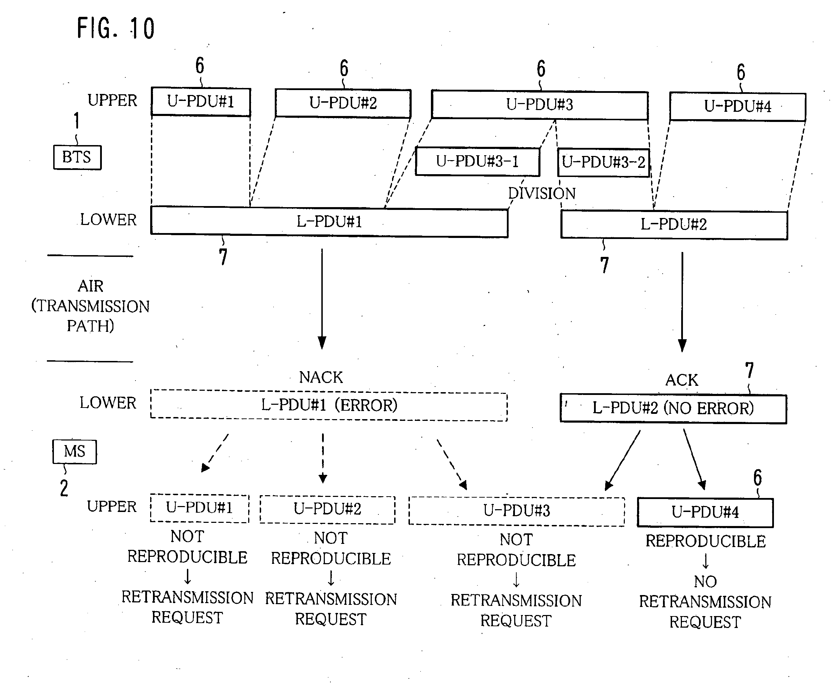

In other words, the transmission frame generator 101 of the base station 1 generates a single L-PDU frame 7 by compiling a plurality of U-PDU frames 6, as shown in FIG. 10. Furthermore, there are instances where a single U-PDU frame 6 is divided into a plurality of pieces, each of which is used for different L-PDU frames 7, as indicated, for example, by the U-PDU frame 6 with "#3" shown in FIG. 10.

In the case where the mobile telephone terminal 2 could not successfully receive any one L-PDU frame 7, it is necessary for the mobile telephone terminal 2 to request the base station 1 to retransmit all U-PDU frames 6 corresponding to that L-PDU frame 7. For example, as shown in FIG. 10, in the case where the L-PDU frame 7 with "#1" could not be successfully received, it is necessary for the mobile telephone terminal 2 to request the base station 1 to resend each of the U-PDU frames 6 with "#1", "#2", and "#3".

However, when this occurs, it is necessary for the base station 1 to retransmit the entire U-PDU frame 6 regardless of the fact that some of the U-PDU frames 6, such as the U-PDU frame 6 with "#3", have already been successfully received by the mobile telephone terminal 2.

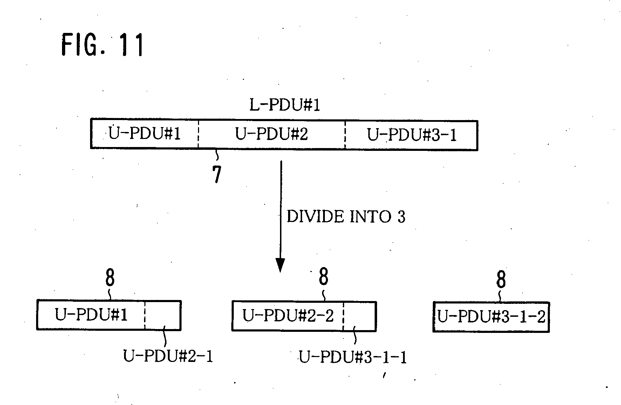

In addition, according to the examples described thus far, in the case where a request for retransmission has been made for an L-PDU frame 7 that could not be successfully received by the mobile telephone terminal 2, the retransmission frame generator 103 of the base station 1 divides an L-PDU frame 7 into a predetermined data length; therefore, there are cases where retransmission frames 8 are generated based on a plurality of U-PDU frames 6, as indicated in FIG. 11. In such a case, the data reproducer 203 of the mobile telephone terminal 2 cannot reproduce (reconstruct) some or all of the U-PDU frames 6 until all of the retransmission frames 8 have been successfully received.

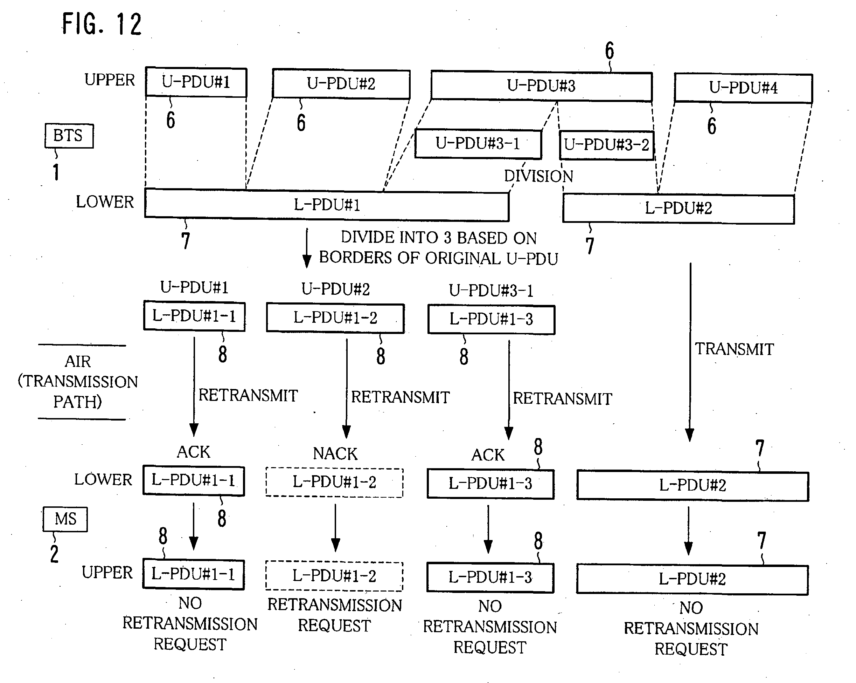

Accordingly, in the case where there is a request for retransmission of the L-PDU frame 7, the retransmission frame generator 103 divides the L-PDU frame 7, thereby generating retransmission frames 8, through the method indicated in FIG. 12.

When the retransmission request acceptor 102 of the base station 1 accepts a request to retransmit the L-PDU frame 7, the retransmission frame generator 103 divides the L-PDU frame 7 by splitting it per U-PDU frame 6 (or part of the U-PDU frame 6), which forms the basis of that L-PDU frame 7. For example, in the case where there has been a request for retransmission of the L-PDU frame 7 with the TSN of "#1", the L-PDU frame 7 is divided as shown in FIG. 12. Then, the transmission frame generator 101 sequentially transmits each piece of data (retransmission frame 8) into which the L-PDU frame 7 was divided.

[Judgment of Suspension and Continuation of Retransmission of Retransmission Frames 8]

As shown in FIG. 10, there are cases where the base station 1 consolidates a plurality of U-PDU frames 6 into a single L-PDU frame 7 and sends that L-PDU frame 7 to the mobile telephone terminal 2.

In the example shown in FIG. 12, when the base station 1 accepts a request to retransmit the L-PDU frame 7, the base station 1 generates retransmission frames 8 by splitting (dividing) the L-PDU frame 7 based on the boundaries between the original U-PDU frames 6. However, as has been shown in FIGS. 5 and 8, there are also cases where the L-PDU frame 7 is divided into predetermined data lengths.

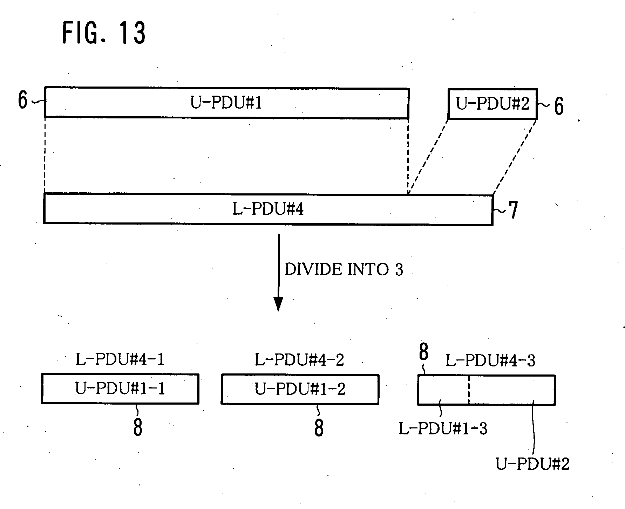

In such a case, for example, three retransmission frames 8 are generated, as shown in FIG. 13: by dividing the L-PDU frame 7 that has a TSN of "#4" and which is made up of the "#1" U-PDU frame 6 and the "#2" U-PDU frame 6 into three parts, a retransmission frame 8 that has a TSN of "#4-1" and which is made up of part of the "#1" U-PDU frame 6, a retransmission frame 8 that has a TSN of "#4-2" and which is made up of another part of the "#1" U-PDU frame 6, and a retransmission frame 8 that has a TSN of "#4-3" and which is made up of the remaining part of the "#1" U-PDU frame 6 and the "#2" U-PDU frame 6, are generated.

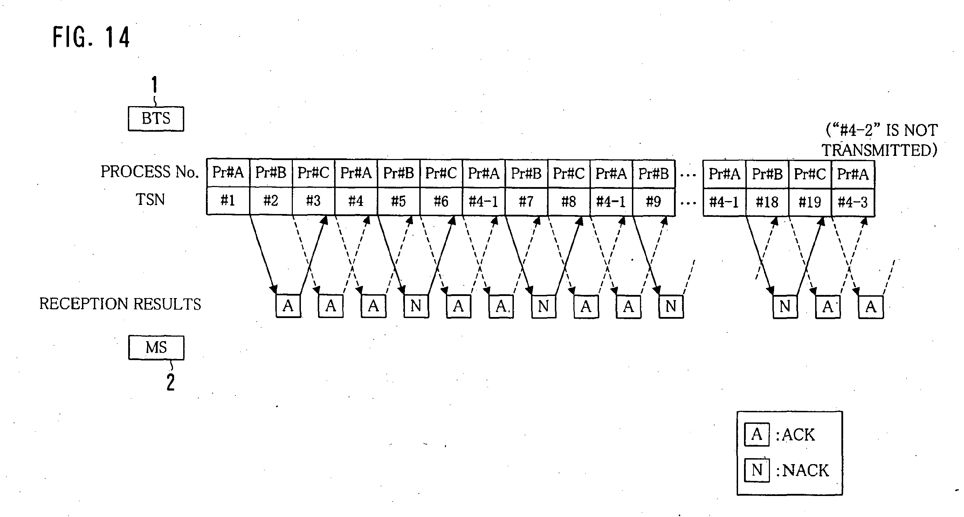

In the case where retransmission frames 8 are generated by the retransmission frame generator 103 in such a manner, the frame transmission controller 104 judges, through a method such as that shown in FIG. 14, whether to suspend or continue retransmission of the retransmission frames 8.

It is assumed that the frame transmission controller 104 has attempted retransmission of a retransmission frame 8 having a TSN of #4-1" a predetermined number of times but a "NACK" signal has been returned each time. In such a case, the frame transmission controller 104 gives up on retransmission of that retransmission frame 8, and judges whether or not the data to be transmitted next in the same process, or in other words, the "#4-2" retransmission frame 8, should be transmitted.

This judgment is made by comparing, in the following manner, the U-PDU frames 6 that form the basis of each of the retransmission frames 8.

In the case where any of the U-PDU frames 6 that form the basis of data to be sent next, or in other words, the "#4-2" retransmission frame 8, are not the same as any of the U-PDU frames 6 that form the basis of the data for which retransmission was abandoned, or in other words, the "#4-1" retransmission frame 8, the frame transmission controller 104 sequentially attempts transmission of the "#4-2" retransmission frame 8 and the retransmission frames 8 that follow.

On the other hand, in the case where all of the U-PDU frames 6 that form the basis of the data to be transmitted next are the same as any of the U-PDU frames 6 that form the basis of the data for which retransmission was abandoned, transmission of the data that is to be transmitted next is suspended. Then, in the same manner, judgment of the data to be transferred thereafter, or in other words, the "#4-3" retransmission frame 8, is performed by comparing that retransmission frame 8 with the "#4-1" retransmission frame 8.

Through such a judgment method, in the case where retransmission of the "#4-1" retransmission frame 8 shown in FIG. 13 has been abandoned, the frame transmission controller 104 stops transmission of the "#4-2" retransmission frame 8 and starts transmission of the "#4-3" retransmission frame 8, as can be seen in FIG. 14.

It should be noted that in the case where the retransmission frames 8 have been generated through the method shown in FIG. 12, all of the retransmission frames 8 will be transmitted.

[Method in which Division Information is Notified to Mobile Telephone Terminal 2]

As has been described thus far, the base station 1 retransmits the L-PDU frame 7 that the mobile telephone terminal 2 could not properly receive by dividing the L-PDU frame 7 into retransmission frames 8 and transmitting the retransmission frames 8. At this time, it is necessary to reliably notify the mobile telephone terminal 2 of which L-PDU frame 7 these retransmission frames 8 belong to.

Accordingly, it is preferable to transmit information regarding the retransmission frames 8 to the mobile telephone terminal 2 through the following method.

In each example described thus far, the TSN of a retransmission frame 8 utilizes a number in which a separate serial number such as "-1" or "-2" is added to the TSN of the original L-PDU frame 7, resulting in TSNs of, for example, "#4-1" or "#4-2".

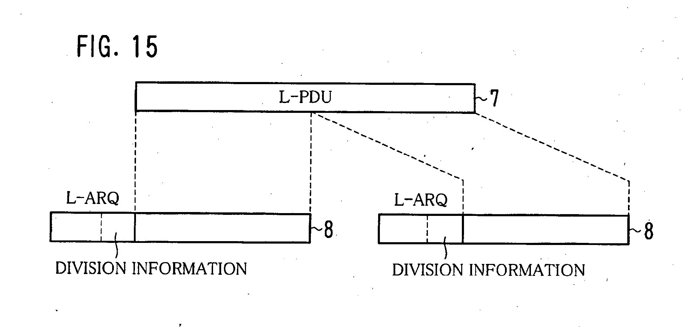

However, rather than using such a TSN, a new TSN may be issued or acquired for the retransmission frame 8, in the same manner as the L-PDU frame 7. Moreover, division information may be written into the L-ARQ header of the retransmission frame 8, as shown in FIG. 15. The following information is included in the division information: information indicating which L-PDU frame 7 division that retransmission frame 8 is a result of (for example, the TSN of the original L-PDU frame 7); information indicating the position of the retransmission frame 8 in the original L-PDU frame 7 (for example, starting position information and size information of the data); and information indicating what number frame, into which the L-PDU frame 7 was divided into, that retransmission frame 8 is.

If the base station 1 generates and transmits the retransmission frames 8 through such a method, when the mobile telephone terminal 2 receives some kind of data (frame), it can judge whether that data is a retransmission frame 8 or an L-PDU frame 7 by analyzing the L-ARQ header of the data and checking the presence/absence of the division information.

In the case where the mobile telephone terminal 2 has judged that the data is a retransmission frame 8, it temporarily stores that data (the retransmission frame 8) in a buffer. Other retransmission frames 8 are stored in the buffer in the same manner. Then, when all the retransmission frames 8 that belong to a single L-PDU frame 7 have been stored in the buffer, the data reproducer 203 reproduces the L-PDU frame 7 based on the division information of the retransmission frames 8.

Alternatively, the base station 1 may use a pre-retransmission L-ARQ header, instead of issuing or acquiring a new TSN. However, the abovementioned division information is added to the retransmission frames 8 in this case as well. Then, the mobile telephone terminal 2 may store the received retransmission frames 8 in the buffer and reproduce the L-PDU frame 7 based on the division information of the retransmission frames 8.

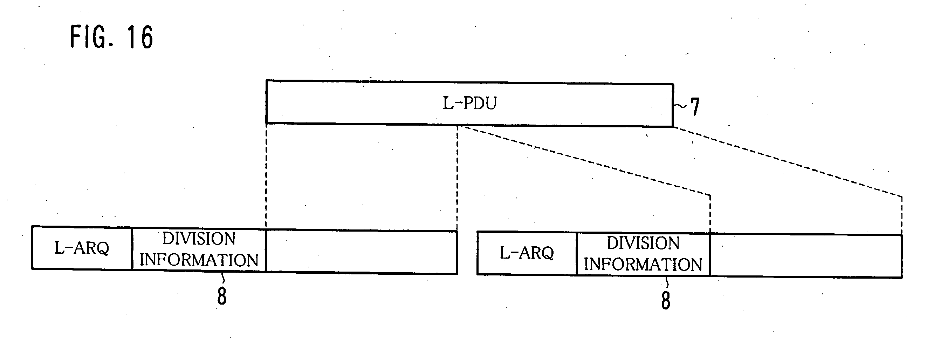

When adding division information in this manner, an area for that division information does not need to be provided in the L-ARQ header. This is because doing so would create a wasteful area in the L-ARQ header of the L-PDU frame 7, which does not need division information, and would put an unnecessary burden in the L-ARQ header. Accordingly, as shown in FIG. 16, it is preferable to add the division information only to the retransmission frame 8, separately from the L-ARQ header.

[Processing in Mobile Telephone Terminal 2 in the Case where All Retransmission Frames are Not Present]

It cannot be said with certainty that the mobile telephone terminal 2 can receive the retransmission frames 8 that belong to a single L-PDU frame 1. However, there are cases where some U-PDU frames 6 can be reproduced if some of the retransmission frames 8 are present.

Accordingly, the mobile telephone terminal 2 may handle the retransmission frames 8 received from the base station 1 through the following method.

As described earlier, when a sequence of retransmission frames 8 are sequentially sent from the base station 1 through a certain process, the mobile telephone terminal 2 stores these retransmission frames 8 in a buffer, one by one.

In the present embodiment, Stop and Wait is utilized, and thus when data that is not divided data (retransmission frames 8), or in other words, a different L-PDU frame 7 is transmitted through that process, it follows that the transmitting/receiving of the sequence of retransmission frames 8 has ended.

Therefore, when a different L-PDU frame 7 has been transmitted through that process, the data reproducer 203 attempts reproduction of a U-PDU frame 6 using the retransmission frames 8 that are stored in the buffer. That is, the retransmission frames 8 are passed from a lower layer to a higher layer, and reproduction of a U-PDU frame 6 is attempted.

Through such a method, even in the case where some of the retransmission frames 8 could not be received, the mobile telephone terminal 2 can still effectively utilize those retransmission frames 8 for the reproduction of the U-PDU frame 6. In addition, if a U-PDU frame 6 that could not be reproduced but which is necessary is present, a request may be made to the base station 1 for retransmission of that U-PDU frame 6 only. Furthermore, it is possible to quickly proceed to the next processing (for example, reordering buffer storage or the like), and therefore the overall performance can be improved.

Note that the retransmission frames 8 that could not be received can be identified easily by referring to the division information of the retransmission frames 8 that have been received.

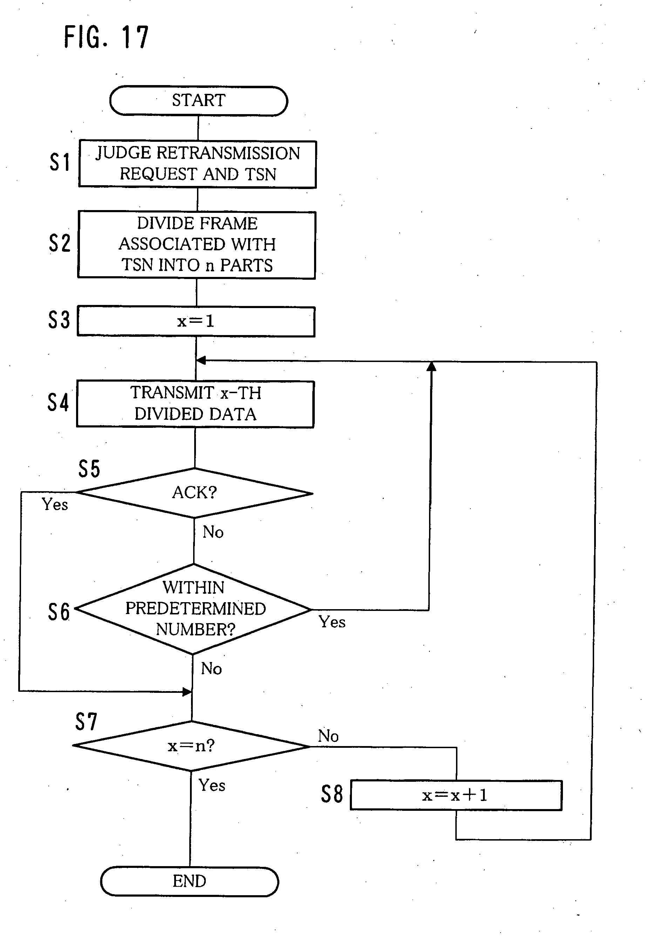

Next, the flow of the processing performed by the base station 1 in the case where a request for retransmission of an L-PDU frame 7 has been made shall be explained with reference to the flowchart shown in FIG. 17.

In FIG. 17, upon accepting a request for retransmission of the L-PDU frame 7 from the mobile telephone terminal 2 (S1), the base station 1 divides that L-PDU frame 7 into a plurality of retransmission frames 8 (S2). As described earlier, there are various methods used for this division.

The base station 1 sequentially sends the retransmission frames 8 to the mobile telephone terminal 2, starting with the first retransmission frame 8 (S3 to S8). However, in the case where a "NACK" signal is returned for the xth $(1 \leq x \leq n)$ retransmission frame 8 (No in S5), retransmission of that retransmission frame 8 is attempted within a predetermined number of times (Yes in S6; S4). As described earlier, there are various ways of determining the predetermined number of times.

Note that in the case where the mobile telephone terminal 2 could not properly receive the retransmission frame 8 even after it has been retransmitted within the predetermined number of times, there are cases where transmission of subsequent retransmission frames 8 is stopped regardless of the condition of Step S7, as well as cases where transmission is continued, as was explained earlier. There are also case where, according to the configuration, the determination to stop or continue transmission is made per retransmission frame 8.

According to the present embodiment, in the case where the mobile telephone terminal 2 cannot successfully receive an L-PDU frame 7, the base station 1 divides that L-PDU frame 7 into a plurality of retransmission frames 8 and retransmits the retransmission frames 8, rather than simply retransmitting the L-PDU frame 7 as-is as per the conventional art. Thus, it is possible to reduce the amount of data sent each time, increase the reliability of error correction, and raise the reliability of retransmission of the L-PDU frame 7 beyond that of the conventional art. Furthermore, it is possible to suppress data puncture caused by rate matching beyond what is possible with the conventional art.

It should be noted that many modifications to part or all of the configuration of the communications system 100, the base station 1, and the mobile telephone terminal 2, the processing content, the processing order, the frame structure, and so on can be made without deviating from the scope of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

**Claims**

1. A data retransmission method for retransmitting data of a frame format in accordance with a protocol from a transmitting side (1) to a receiving side (2) wherein the receiving side (2) has requested the transmitting side (1) to retransmit data, and the transmitting side (1):

   divides data to be retransmitted (7), based on a request for retransmission, into a plurality of pieces of divided data (8) upon receipt of a request for the retransmission of the data (7) from the receiving side (2); and
   sends each piece of divided data (8) to the receiving side (2);
   **characterised in that** each piece of divided data (8) is set to a size based on the quality of communication with the receiving side (2).

2. The data retransmission method according to Claim 1,
   **characterized in that** the transmitting side (1) divides the data to be retransmitted (7) into larger-sized pieces of divided data (8) the higher a quality of communication with the receiving side (2), and divides the data to be retransmitted (7) into smaller-sized pieces of divided data (8) the lower the quality of communication with the receiving side (2).

3. The data retransmission method according to Claim 1,
   **characterized in that** the transmitting side (1) divides the data to be retransmitted (7) into fewer pieces of divided data (8) the higher a quality of communication with the receiving side (2), and divides the data to be retransmitted (7) into more pieces of divided data (8) the lower the quality of communication with the receiving side (2).

4. The data retransmission method according to Claim 1,
   **characterized in that** the data to be retransmitted (7) includes a plurality of frames (6) generated based on a protocol of a higher layer than a protocol to which the data to be retransmitted (7) belongs, and the transmitting side (1) divides the data to be retransmitted (7) into the pieces of divided data (8) so that data that belongs to a single frame (6) is not divided.

5. The data retransmission method according to any of Claims 1 to 4,
   **characterized in that** information regarding the data to be retransmitted (7) is added to the pieces of divided data (8), the data to be retransmitted (7) being the basis of the divided data (8).

6. The data retransmission method according to any of Claims 1 to 5,
   **characterized in that** the transmitting side (1) limits the number of times a piece of divided data (8) is retransmitted to a predetermined number of times, and
   in the case where a piece of divided data (8) belonging to the data to be retransmitted (7) is not successfully received by the receiving side (2) within the predetermined number of times, the transmitting side (1) stops transmitting the remaining pieces of divided data (8) belonging to the data to be retransmitted (7).

7. The data retransmission method according to Claim 1,
   **characterized in that** the data to be retransmitted (7) includes a plurality of frames (6) generated based on a protocol of a higher layer than a layer of a protocol to which the data to be retransmitted (7) belongs, and the transmitting side (1):

   limits the number of times a piece of divided data (8) is retransmitted to a predetermined number of times; and
   in the case where a piece of the divided data (8) belonging to the data to be retransmitted (7) is not successfully received by the receiving side (2) within the predetermined number of times, transmits to the receiving side (2) the divided data (8) that includes a part of a frame (6) different from all the frames (6) whose part is included in the divided data (8) that is not successfully received, but stops transmitting the other divided data (8) to the receiving side (2).

8. The data retransmission method according to any of Claims 1 to 7,
   **characterized in that** the transmitting side (1) limits the number of times the divided data (8) is retransmitted in accordance with the number of pieces of divided data (8) into which the data to be retransmitted (7) has been divided.

9. A communications device (1) comprising:

   a retransmission request acceptor (102) for accepting a request to retransmit data from a requester;
   a data divider (103) for dividing data to be retransmitted (7) into a plurality of pieces of divided data (8) upon receipt of a request for the retransmission of the data (7) from the retransmission request acceptor (102); and
   a divided data transmitter (104) for transmitting each piece of the divided data (8) to the requester;
   **characterised in that** the data divider (103) is arranged to set each piece of divided data (8) to a size based on the quality of communication with the requester.

10. A computer readable medium storing a program used in a computer (1) for transmitting and receiving data via a communication line, the program causing a computer to perform the steps of:

    accepting from a requester a request to retransmit data (7);

    dividing the data to be retransmitted (7) into a plurality of pieces of divided data (8) upon receipt of a request for the retransmission of the data (7); and

    transmitting each piece of the divided data (8) to the requester;

    wherein each piece of divided data (8) is set to a size based on the quality of communication with the requester.

## Patentansprüche

1. Datenneuübertragungsverfahren zum Neuübertragen von Daten eines Rahmenformats in Übereinstimmung mit einem Protokoll von einer Sendeseite (1) an eine Empfangsseite (2), wobei die Empfangsseite (2) die Sendeseite (1) angefordert hat, Daten neu zu übertragen, und die Sendeseite (1):

    Daten unterteilt, die neu zu übertragen sind (7) auf Grundlage einer Anforderung zum Neuübertragen in eine Vielzahl von Elementen unterteilter Daten (8), bei Empfang einer Anforderung zur Neuübertragung der Daten (7) von der Empfangsseite (2); und

    jedes Element unterteilter Daten (8) an die Empfangsseite (2) sendet;

    **dadurch gekennzeichnet, dass** jedes Element unterteilter Daten (8) auf eine Größe eingestellt ist, auf Grundlage der Qualität einer Kommunikation mit der Empfangsseite (2).

2. Datenneuübertragungsverfahren nach Anspruch 1, **dadurch gekennzeichnet, dass** die Sendeseite (1) die neu zu übertragenden Daten unterteilt (7) in Elemente größerer Größe von unterteilten Daten (8) bei einer höheren Qualität einer Kommunikation mit der Empfangsseite (2), und die neuzuübertragenden Daten, unterteilt (7) in Elemente kleinerer Größe unterteilter Daten (8) bei einer geringeren Qualität einer Kommunikation mit der Empfangsseite (2).

3. Datenneuübertragungsverfahren nach Anspruch 1, **dadurch gekennzeichnet, dass** die Sendeseite (1) die neu zu übertragenden Daten (7) in weniger Elemente unterteilter Daten (8) unterteilt, bei einer höheren Qualität einer Kommunikation mit der Empfangsseite (2), und die neuzuübertragenden Daten (7), in mehr Elemente unterteilter Daten (8) unterteilt, bei einer geringeren Qualität einer Kommunikation mit der Empfangsseite (2).

4. Datenneuübertragungsverfahren nach Anspruch 1, **dadurch gekennzeichnet, dass** die neuzuübertragenden Daten (7) eine Vielzahl von Rahmen (6) enthält, die auf Grundlage eines Protokolls einer höheren Schicht erzeugt werden, als ein Protokoll, zu dem die neuzubertragenden Daten (7) gehören, und die Sendeseite (1) die neuzuübertragenden Daten (7) in die Elemente unterteilter Daten (8) unterteilt, sodass Daten, die zu einem einzelnen Rahmen (6) gehören, nicht unterteilt werden.

5. Datenneuübertragungsverfahren nach einem der Ansprüche 1 bis 4, **dadurch gekennzeichnet, dass** eine Information in Bezug auf die neuzuübertragenden Daten (7) den Elementen unterteilter Daten (8) hinzugefügt wird, wobei die neuzuübertragenden Daten (7) die Grundlage der unterteilten Daten (8) ist.

6. Datenneuübertragungsverfahren nach einem der Ansprüche 1 bis 5, **dadurch gekennzeichnet, dass** die Sendeseite (1) die Anzahl beschränkt, dass ein Element unterteilter Daten (8) neuübertragen wird, auf eine vorbestimmte Anzahl, und in dem Fall, dass ein Element unterteilter Daten (8), das zu den neuübertragenden (7) gehört, nicht erfolgreich durch die Empfangsseite (2) in der vorbestimmten Anzahl empfangen wird, die Sendeseite (1) das Übertragen der verbleibenden Elemente unterteilter Daten (8) stoppt, die zu den neuzuübertragenden Daten (7) gehören.

7. Datenneuübertragungsverfahren nach Anspruch 1, **dadurch gekennzeichnet, dass** die neuzuübertragenden Daten (7) eine Vielzahl von Rahmen (6) enthalten, die erzeugt werden auf Grundlage eines Protokolls einer höheren Schicht als eine Schicht eines Protokolls, zu dem die neuzuübertragenden Daten (7) gehören, und die Sendeseite (1):

    die Anzahl beschränkt, dass ein Element unterteilter Daten (8) neuübertragen wird, auf eine vorbestimmte Anzahl; und

    für den Fall, dass ein Element der unterteilten Daten (8), die zu den neuzuübertragenden Daten (7) gehören, nicht erfolgreich durch die Empfangsseite (2) in der vorbestimmten Anzahl empfangen wird, an die Empfangsseite (2) die unterteilten Daten (8) sendet, die einen Teil eines Rahmens (6) enthalten, im Unterschied von allen den Rahmen (6), dessen Teil in den unterteilten Daten (8) enthalten ist, die nicht erfolgreich empfangen wurden, sondern das Neuübertragen der anderen unterteilten Daten (8) an die Empfangsseite (2) stoppt.

8. Datenneuübertragungsverfahren nach einem der Ansprüche 1 bis 7,
**dadurch gekennzeichnet, dass** die Sendeseite (1) die Anzahl beschränkt, die unterteilten Daten (8) neuübertragen werden, in Übereinstimmung mit der Anzahl von Elementen unterteilter Daten (8), in die die neuzuübertragenden Daten (7) unterteilt wurden.

9. Kommunikationsvorrichtung (1) umfassend:

   ein Neuübertragungsanforderungszustimmungsmittel (102) zum Zustimmen einer Anforderung zum Neuübertragen von Daten von einem Anforderungsmittel;
   ein Datenunterteilungsmittel (103) zum Unterteilen von neuzuübertragenden Daten (7) in eine Vielzahl von Elementen unterteilter Daten (8), bei Empfang einer Anforderung zur Neuübertragung der Daten (7) von dem Neuübertragungsanforderungszustimmungsmittel (102); und
   ein Unterteilte-Daten-Sendemittel (104) zum Senden jedes Elements der unterteilten Daten (8) an das Anforderungsmittel;
   **dadurch gekennzeichnet, dass** das Datenunterteilungsmittel (103) ausgebildet ist zum Einstellen jedes Elements unterteilter Daten (8) auf eine Größe auf Grundlage der Qualität einer Kommunikation mit dem Anforderungsmittel.

10. Computer-lesbares Medium, das ein Programm speichert, das in einem Computer (1) verwendet wird, zum Senden und Empfangen von Daten über eine Kommunikationsleitung, wobei das Programm bewirkt, dass ein Computer den Schritt durchführt zum:

    Zustimmen von einem Anforderungsmittel einer Anforderung zum Neuübertragen von Daten (7);
    Unterteilen der neuzuübertragenden Daten (7) in eine Vielzahl von Elementen unterteilter Daten (8), bei Empfang einer Anforderung zur Neuübertragung der Daten (7) ; und
    Überragen jedes Elements der unterteilten Daten (8) an das Anforderungsmittel;
    wobei jedes Element unterteilter Daten (8) auf eine Größe eingestellt ist, auf Grundlage der Qualität einer Kommunikation mit dem Anforderungsmittel.

**Revendications**

1. Procédé de retransmission de données destiné à retransmettre des données d'un format de trame selon un protocole, d'un côté émetteur (1) à un côté récepteur (2), dans lequel le côté récepteur (2) a demandé au côté émetteur (1) de retransmettre des données, et
   le côté émetteur (1) :

   divise des données destinées à être retransmises (7), sur la base d'une demande de retransmission, en une pluralité d'éléments de données divisées (8), suite à la réception d'une demande de retransmission des données (7) en provenance du côté récepteur (2) ; et
   envoie chaque élément de données divisées (8) au côté récepteur (2) ;
   **caractérisé en ce que** chaque élément de données divisées (8) est défini sur une certaine taille, sur la base de la qualité de communication avec le côté récepteur (2).

2. Procédé de retransmission de données selon la revendication 1,
   **caractérisé en ce que** lorsque le côté émetteur (1) divise les données destinées à être retransmises (7) en éléments de données divisées de plus grande taille (8), la qualité de communication avec le côté récepteur (2) augmente, et lorsqu'il divise les données destinées à être retransmises (7) en éléments de données divisées de plus petite taille (8) la qualité de communication avec le côté récepteur (2) diminue.

3. Procédé de retransmission de données selon la revendication 1,
   **caractérisé en ce que**, lorsque le côté émetteur (1) divise les données destinées à être retransmises (7) en éléments de données divisées en nombre inférieur (8), la qualité de communication avec le côté récepteur (2) augmente, et lorsqu'il divise les données destinées à être retransmises (7) en éléments de données divisées en nombre supérieur (8), la qualité de communication avec le côté récepteur (2) diminue.

4. Procédé de retransmission de données selon la revendication 1,
   **caractérisé en ce que** les données destinées à être retransmises (7) incluent une pluralité de trames (6) générées sur la base d'un protocole d'une couche supérieure à celle d'un protocole auquel appartiennent les données destinées à être retransmises (7) ;
   et
   le côté émetteur (1) divise les données destinées à être retransmises (7) en les éléments de données divisées (8), de sorte que des données qui appartiennent à une trame unique (6) ne sont pas divisées.

5. Procédé de retransmission de données selon l'une quelconque des revendications 1 à 4, **caractérisé en ce que** des informations concernant les données destinées à être retransmises (7) sont ajoutées aux éléments de données divisées (8), les données destinées à être retransmises (7) constituant la base des données divisées (8).

6. Procédé de retransmission de données selon l'une quelconque des revendications 1 à 5, **caractérisé en ce que** le côté émetteur (1) limite le nombre d'occurrences où un élément de données divisées (8) est retransmis, à un nombre d'occurrences prédéterminé ; et dans le cas où un élément de données divisées (8) appartenant aux données destinées à être retransmises (7) n'est pas reçu correctement par le côté récepteur (2) dans la limite du nombre d'occurrences prédéterminé, le côté émetteur (1) cesse de transmettre les éléments de données divisées restants (8) appartenant aux données destinées à être retransmises (7).

7. Procédé de retransmission de données selon la revendication 1, **caractérisé en ce que** les données destinées à être retransmises (7) incluent une pluralité de trames (6) générées sur la base d'un protocole d'une couche supérieure à une couche d'un protocole auquel les données destinées à être retransmises (7) appartiennent ; et le côté émetteur (1) :

limite le nombre d'occurrences où un élément de données divisées (8) est retransmis, à un nombre d'occurrences prédéterminé ; et dans le cas où un élément des données divisées (8) appartenant aux données destinées à être retransmises (7) n'est pas reçu correctement par le côté récepteur (2) dans la limite du nombre d'occurrences prédéterminé, il transmet, au côté récepteur (2), les données divisées (8) qui incluent une partie d'une trame (6) différente de toutes les trames (6) dont une partie est incluse dans les données divisées (8) qui ne sont pas reçues correctement, mais il cesse de transmettre les autres données divisées (8) au côté récepteur (2).

8. Procédé de retransmission de données selon l'une quelconque des revendications 1 à 7, **caractérisé en ce que** le côté émetteur (1) limite le nombre d'occurrences où les données divisées (8) sont retransmises selon le nombre d'éléments de données divisées (8) en lequel les données destinées à être retransmises (7) ont été divisées.

9. Dispositif de communication (1) comprenant :

un module d'acceptation de demandes de retransmission (102) destiné à accepter une demande de retransmission de données en provenance d'un demandeur ; un module de division de données (103) destiné à diviser des données destinées à être retransmises (7), en une pluralité d'éléments de données divisées (8), suite à la réception d'une demande de retransmission des données (7) en provenance du module d'acceptation de demandes de retransmission (102) ; et un émetteur de données divisées (104) destiné à transmettre chaque élément des données divisées (8) au demandeur ; **caractérisé en ce que** le module de division de données (103) est agencé de manière à définir chaque élément de données divisées (8) sur une taille basée sur la qualité de communication avec le demandeur.

10. Support lisible par ordinateur stockant un programme utilisé dans un ordinateur (1) en vue de transmettre et de recevoir des données par l'intermédiaire d'une ligne de communication, le programme amenant un ordinateur à exécuter les étapes ci-dessous consistant à :

accepter, d'un demandeur, une demande de retransmission de données (7) ; diviser les données destinées à être retransmises (7) en une pluralité d'éléments de données divisées (8) suite à la réception d'une demande de retransmission des données (7) ; et transmettre chaque élément des données divisées (8) au demander ; dans lequel chaque élément de données divisées (8) est défini sur une taille basée sur la qualité de communication avec le demandeur.

FIG. 1

100

1

BASE STATION

2

2

1

BASE STATION

2

2

UPPER APPARATUS
(SWITCHING
CENTER, ETC.)

14

## FIG. 2

UPPER APPARATUS

15

## FIG. 3

# FIG. 4

HIGHER

5

DATA

6

| U-ARQ | |

U-PDU

| L-ARQ | U-ARQ | | ~7

L-PDU

| L-ARQ | | ~7

L-PDU

LOWER

## FIG. 5

| L-PDU#4 | ~7 |

| L-PDU#4-1 | | L-PDU#4-2 |

8                           8

## FIG. 6

EP 1 892 874 B1

BTS ~1

| PROCESS No. | Pr#A | Pr#B | Pr#C | Pr#A | Pr#B | Pr#C | Pr#A | Pr#B | Pr#C | Pr#A | Pr#B | Pr#C | Pr#A | Pr#B | Pr#C |
|---|---|---|---|---|---|---|---|---|---|---|---|---|---|---|---|
| TSN | #1 | #2 | #3 | #4 | #5 | #6 | #4-1 | #7 | #8 | #4-2 | #9 | #10 | #11 | #12 | #13 |

RECEPTION RESULT  A  A  A  N  A  A  A  A  A  A  A  A  A

RETRANSMISSION
REQUEST

MS ~2

| A | :ACK |
| N | :NACK |

## FIG. 7

DIVISION/RETRANSMISSION

NO DIVISION

BTS ~1

| PROCESS No. | Pr#A | Pr#B | Pr#C | Pr#A | Pr#B | Pr#C | Pr#A | Pr#B | Pr#C | Pr#A | Pr#B | Pr#C | Pr#A | Pr#B | Pr#C |
|---|---|---|---|---|---|---|---|---|---|---|---|---|---|---|---|
| TSN | #1 | #2 | #3 | #4 | #5 | #6 | #4 | #7 | #8 | #4-1 | #9 | #10 | #4-2 | #11 | #12 |

RECEPTION RESULT

A A A N A A N A A A A A A

MS ~2

FIRST RETRANSMISSION REQUEST

SECOND RETRANSMISSION REQUEST

A : ACK

N : NACK

EP 1 892 874 B1

FIG. 8A

L-PDU#4 ~7

#4-1    8

#4-2    8

#4-3    8

FIG. 8B

L-PDU#4 ~7

#4-1   8

#4-2   8

#4-3   8

#4-4   8

#4-5   8

# FIG. 9

RECEPTION RESULT

# FIG. 10

**BTS 1**

| UPPER | U-PDU#1 [6] | U-PDU#2 [6] | U-PDU#3 [6] | U-PDU#4 [6] |

U-PDU#3-1    U-PDU#3-2

DIVISION

| LOWER | L-PDU#1 [7] | L-PDU#2 [7] |

AIR
(TRANSMISSION
PATH)

NACK

ACK    7

**MS 2**

| LOWER | L-PDU#1 (ERROR) | L-PDU#2 (NO ERROR) [7] |

| UPPER | U-PDU#1 | U-PDU#2 | U-PDU#3 | U-PDU#4 [6] |

NOT
REPRODUCIBLE
↓
RETRANSMISSION
REQUEST

NOT
REPRODUCIBLE
↓
RETRANSMISSION
REQUEST

NOT
REPRODUCIBLE
↓
RETRANSMISSION
REQUEST

REPRODUCIBLE
↓
NO
RETRANSMISSION
REQUEST

EP 1 892 874 B1

FIG. 11

L-PDU#1

| U-PDU#1 | U-PDU#2 | U-PDU#3-1 |
| --- | --- | --- |

7

DIVIDE INTO 3

8

| U-PDU#1 | |
| --- | --- |

U-PDU#2-1

8

| U-PDU#2-2 | |
| --- | --- |

U-PDU#3-1-1

8

| U-PDU#3-1-2 |
| --- |

FIG. 12

## FIG. 13

6 ~| U-PDU#1 | U-PDU#2 |~ 6

L-PDU#4 ~7

DIVIDE INTO 3

L-PDU#4-1

| U-PDU#1-1 |

8

L-PDU#4-2

| U-PDU#1-2 |

8

8

L-PDU#4-3

L-PDU#1-3

U-PDU#2

## FIG. 14

1
BTS

("#4-2" IS NOT TRANSMITTED)

| PROCESS No. | Pr#A | Pr#B | Pr#C | Pr#A | Pr#B | Pr#C | Pr#A | Pr#B | Pr#C | Pr#A | Pr#B | ... | Pr#A | Pr#B | Pr#C | Pr#A |
|---|---|---|---|---|---|---|---|---|---|---|---|---|---|---|---|---|
| TSN | #1 | #2 | #3 | #4 | #5 | #6 | #4-1 | #7 | #8 | #4-1 | #9 | ... | #4-1 | #18 | #19 | #4-3 |

RECEPTION RESULTS A A A N A A N A A N N A A

MS
2

A :ACK
N :NACK

EP 1 892 874 B1

## FIG. 15

L-PDU ~7

L-ARQ

DIVISION INFORMATION

~8

L-ARQ

DIVISION INFORMATION

~8

FIG. 16

L-PDU ~7

| L-ARQ | DIVISION INFORMATION | |

8

| L-ARQ | DIVISION INFORMATION | |

8

EP 1 892 874 B1

# FIG. 17

```
                    ┌──────────────────┐
                    │      START       │
                    └──────────────────┘
                             │
         ┌──────────────────────────────────┐
    S1   │    JUDGE RETRANSMISSION          │
         │      REQUEST AND TSN             │
         └──────────────────────────────────┘
                             │
         ┌──────────────────────────────────┐
         │        DIVIDE FRAME              │
    S2   │      ASSOCIATED WITH             │
         │      TSN INTO n PARTS            │
         └──────────────────────────────────┘
                             │
         ┌──────────────────────────────────┐
    S3   │             x=1                  │
         └──────────────────────────────────┘
                             │
         ┌──────────────────────────────────┐
    S4   │       TRANSMIT x-TH             │
         │       DIVIDED DATA              │
         └──────────────────────────────────┘
                             │
    S5              ◇ ACK? ◇
         Yes ◄──────────────────── No
                             │
    S6         ◇ WITHIN           ◇
               PREDETERMINED         ──── Yes ──►
               NUMBER?
                          No
                             │
    S7              ◇ x=n? ◇  ──── No
                          Yes              S8  x=x+1
                             │
                    ┌──────────────────┐
                    │       END        │
                    └──────────────────┘
```

# FIG. 18

| HIGHER LAYER PDU | | HIGHER LAYER PDU |
|---|---|---|

| | RLC SDU | RLC SDU |
|---|---|---|

**RLC**

| RLC HEADER | | RLC HEADER | | ··· | ··· | RLC HEADER | PAD |
|---|---|---|---|---|---|---|---|

| RLC PDU | RLC PDU | ··· | ··· | RLC PDU |
|---|---|---|---|---|

| MAC-d HEADER | MAC-d SDU | MAC-d HEADER | MAC-d SDU | ··· | ··· | MAC-d HEADER | MAC-d SDU |
|---|---|---|---|---|---|---|---|

**MAC-d**

| MAC-d PDU | MAC-d PDU | ··· | ··· | MAC-d PDU |
|---|---|---|---|---|

**MAC-hs**

| MAC-hs HEADER | MAC-d SDU | PAD |
|---|---|---|

| MAC-d PDU |
|---|

|←——————————————1TTI (2ms)——————————————→|

EP 1 892 874 B1

FIG. 19

| | | 1 oct | |
|---|---|---|---|
| VF | QUEU ID | TSN | Oct 1 |
| TSN | SID1 | N1 | Oct 2 |
| N1 | F1 | | Oct 3 |
| MAC-hs SDU | | | ⋮ |
| | | PADDING | Oct N |

FIG. 20

EP 1 892 874 B1

**EP 1 892 874 B1**

**REFERENCES CITED IN THE DESCRIPTION**

**Patent documents cited in the description**

- JP 2004349742 A
- US 2003110435 A1
- EP 1615365 A
- US 2002150040 A1